# DEMANDE DE BREVET EUROPEEN

(11) **EP 2 559 594 A1**
(43) Date de publication de la demande: **20.02.2013**
(21) Numéro de dépôt: 12177648.8
(22) Date de dépôt: 24.07.2012
(51) Int. Cl.: B60Q 3/02, B60R 7/06

(54) **Ensemble de boîte à gants multi fonctions pourvu d'un dispositif d'éclairage**

(30) Priorité: 17.08.2011 FR 1157383
(71) Demandeur: PEUGEOT CITROËN AUTOMOBILES SA, 78140 Velizy-Villacoublay (FR)
(72) Inventeur: Kervarec, Florian, 91310 Longpont sur Orge (FR); Appasamy, Jean Michel, 78760 Jouars Pontchartrain (FR)

(57) **Abrégé**

Ensemble de boîte à gants multifonctions comprenant une tablette extractible (3) pourvu d'un dispositif d'éclairage (2) caractérisé en ce que le dispositif d'éclairage (2) est coulissant entre une position rentrée où il éclaire l'intérieur de la boîte à gants et une position extraite où il éclaire l'extérieur de la boîte à gants.

L'invention trouve son application dans le domaine des véhicules automobiles.

## Description

La présente invention est relative à une boîte à gants multi fonctions comprenant une tablette extractible, pourvue d'un dispositif d'éclairage permettant l'éclairage de l'intérieur de la boîte à gants et à l'extérieur de la boîte à gants.

Dans l'état de la technique, nous connaissons le document DE10360650, ce document décrit une boîte à gants comprenant une tablette possédant une source d'éclairage amovible, susceptible de pouvoir être utilisée comme lampe de poche. Le document KR20090060615 décrit un dispositif d'éclairage constitué par un boîtier à lampe, intégré à une boîte à gants permettant d'éclairer soit l'intérieur de ladite boîte à gants soit l'extérieur en direction du siège du passager par une simple rotation du boîtier à lampe autour d'un axe horizontal. Ce dispositif présente l'inconvénient de fournir un éclairage hétérogène, générant un éclairage acceptable en vis-à-vis de la lampe mais par contre des zones d'ombres dans les zones environnantes.

L'invention a pour but de proposer un ensemble de boîte à gants multifonctions pourvu d'un dispositif d'éclairage permettant de s'affranchir de ces inconvénients en proposant un éclairage mobile produisant un éclairage adapté et performant à ces différentes affectations.

La présente invention est donc relative à un ensemble de boîte à gants multifonctions pourvu d'un dispositif d'éclairage produisant une lumière permettant d'éclairer de façon homogène aussi bien l'intérieur de la boîte à gants, que le dessus de la tablette sur toute sa surface en position de service, pour un confort maximum de l'utilisateur.

A cet effet, l'ensemble de boîte à gants multifonctions comprend une tablette extractible pourvu d'un dispositif d'éclairage, le dispositif d'éclairage étant coulissant entre une position rentrée où il éclaire l'intérieur de la boîte à gants et une position extraite où il éclaire l'extérieur de la boîte à gants.

Avantageusement, le dispositif d'éclairage est constitué par une réglette comportant une source de lumière, de faible encombrement.

De façon avantageuse, la source de lumière est constituée par un guide de lumière placé à l'intérieur de la réglette.

Selon une caractéristique, la source de lumière est constituée par un ensemble de diodes réparties à l'intérieur et sur la longueur de la réglette.

Selon une autre caractéristique, la réglette comporte à son extrémité une languette permettant de la manoeuvrer entre sa position rentrée et sa position extraite.

Selon une autre caractéristique, la réglette est disposée dans un fourreau ménagé à l'extérieur de la cloison latérale de la boite à gants.

Avantageusement, le fourreau recevant la réglette est parallèle à la tablette extractible.

Selon une autre caractéristique avantageuse, la réglette émet de la lumière à l'intérieur de la boîte à gants à travers des ouvertures ménagées dans sa cloison latérale.

Avantageusement, la réglette émet de la lumière à travers des ouvertures ménagées sur sa périphérie.

Selon une caractéristique avantageuse, la réglette en position rentrée a ses ouvertures en correspondance avec les ouvertures ménagées dans sa cloison latérale de la boîte à gants.

L'invention concerne également un véhicule comportant un ensemble de boîte à gants multifonctions comprenant une tablette extractible pourvu d'un dispositif d'éclairage ayant les caractéristiques susmentionnées.

D'autres caractéristiques d'un ensemble de boîte à gants multifonctions pourvu d'un dispositif d'éclairage réalisé conformément à l'invention, apparaîtront encore à travers la description qui suit de plusieurs exemples de réalisation donnés à titre indicatif et non limitatif en référence aux dessins annexés sur lesquels :
- La figure 1 est une vue en perspective de dessus gauche d'un ensemble de boîte à gants pourvu d'un dispositif d'éclairage mobile comportant une tablette en position d'utilisation et montrant l'extérieur de la boîte à gants un dispositif d'éclairage en position rétracté.
- La figure 2 est une vue en perspective de dessus droite d'un ensemble de boîte à gants pourvu d'un dispositif d'éclairage mobile comportant une tablette en position d'utilisation et montrant de l'intérieur gauche de la boîte à gants, un dispositif d'éclairage en position extraite.

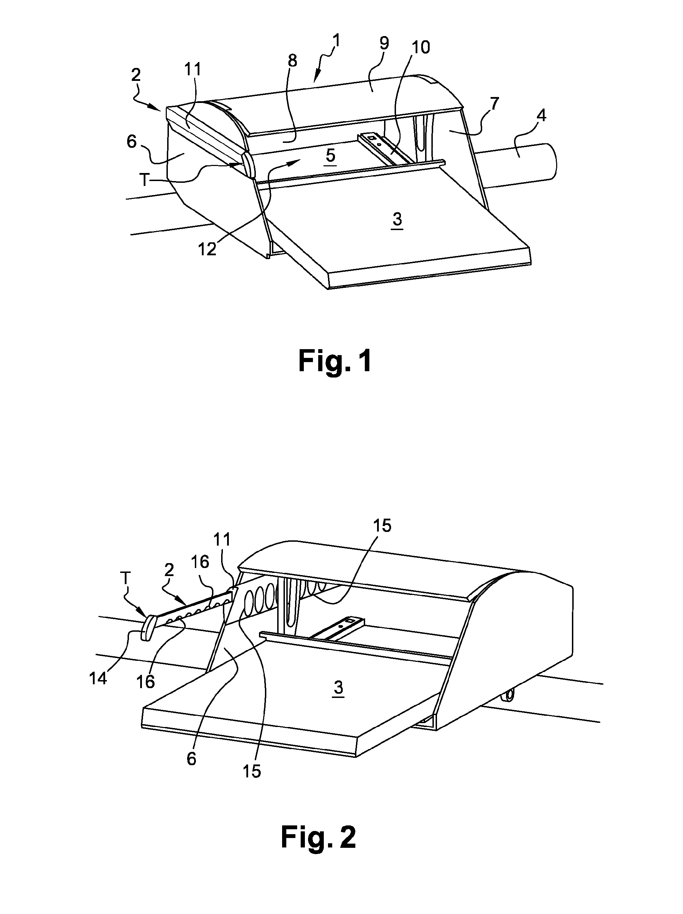

La figure 1 est une vue en perspective de dessus gauche d'un ensemble de boîte à gants 1 pourvu d'un dispositif d'éclairage mobile 2 comportant une tablette 3 en position d'utilisation et montrant à l'extérieur de la boîte à gants 1, le dispositif d'éclairage 2 en position rétracté. La boîte à gants 1 est montée sur une traverse de planche de bord 4. La boîte à gants 1 est constituée d'une base 5 ancrée solidement sur la traverse de la planche de bord 4, de deux cloisons latérales 6,7, d'un fond 8, est d'un plafond 9. Sur la face avant, le couvercle n'est pas représenté. Il s'agit par exemple d'un couvercle coulissant à lamelles qui est remisé dans le plafond 9 de la boîte à gants 1. La base 5 de la boîte à gants est munie de glissières 10 sur laquelle est susceptible de se déplacer une tablette 3, dont le plan de travail correspond à la surface interne de la boîte à gants de manière à la ranger intégralement dans le logement 12 de la boîte à gants 1. La tablette 3 peut être extraite du logement 12 pour son utilisation, par son déplacement sur les glissières 10 comme montré sur la figure. Un boîtier en forme de fourreau 11 a été assemblé, sur la partie supérieure de la cloison 6, recevant la réglette 2. Le fourreau 11 est assemblé sur la cloison 6 parallèlement au sens de déplacement de la tablette. La réglette 2 est extractible en tirant sur sa languette 14, afin de la faire coulisser dans le fourreau pour l'extraire dans une position par exemple d'utilisation de la tablette 3.

La figure 2 est une vue en perspective de dessus droite d'un ensemble de boîte à gants 1 pourvu d'un dispositif d'éclairage mobile 2 comportant une tablette 3 en position d'utilisation et montrant de l'intérieur gauche de la boîte à gants 1, un dispositif d'éclairage 2 en position extraite. Sur cette vue, nous retrouvons la boîte à gants 1 de la figure 1, en perspective sous un autre angle et par conséquent elle ne sera pas décrite à nouveau. Sur la vue, on voit la tablette 3 en position d'utilisation à l'extérieur de la boîte à gants. Le dispositif d'éclairage matérialisé par la réglette 2 est manoeuvré par la languette 14. La cloison 6 sur laquelle est fixé le fourreau 11, comporte en vis-à-vis du fourreau 11 une succession d'ouvertures 15 régulièrement réparties. Ces ouvertures 15 permettent le passage de la lumière lorsque la réglette 2 est rentrée pour éclairer l'intérieur du logement 12 de la boîte à gants 1. La source de lumière est disposée à l'intérieur de la réglette 2 et la lumière est émise par des ouvertures 16 régulièrement réparties le long de la périphérie de la réglette 2 et dirigée dans une direction médiane de la tablette 3 afin de diffuser la lumière de façon optimale, sur le plan de travail de la tablette 3. Lorsque la réglette 2 est rentrée, les ouvertures 16 de la réglette 2 sont en correspondance avec les ouvertures 15 de la cloison 6 de la boîte à gants 1, de manière à éclairer l'intérieur de la boîte à gants 1. De surcroît, les ouvertures 15 de la cloison 6 sont plus grandes que les ouvertures 16 de la réglette 2 afin de ne pas créer d'interférence préjudiciable à un éclairage satisfaisant de l'intérieur de la boîte à gants 1. La réglette 2 peut bien évidemment recevoir des sources de lumières différentes telles que par exemple un guide lumière propageant la lumière sur la longueur de la réglette ou alors un ensemble de diodes réparties régulièrement à l'intérieur de la réglette 2.

Bien évidemment, il est possible d'utiliser l'éclairage de la réglette indépendamment de la tablette. Si la tablette est rentrée et le couvercle fermé, l'éclairage de la réglette pourrait être utilisé par exemple comme liseuse.

Bien entendu, il va de soi que l'invention ne se limite pas à l'exemple de réalisation plus spécialement décrit et représenté en référence aux dessins annexés ; elle en embrasse au contraire toutes les variantes.

## Revendications

1. Ensemble de boîte à gants (1) multifonctions comprenant une tablette extractible (3) pourvu d'un dispositif d'éclairage (2) **caractérisé en ce que** le dispositif d'éclairage (2) est coulissant entre une position rentrée où il éclaire l'intérieur (12) de la boîte à gants (1) et une position extraite où il éclaire l'extérieur de la boîte à gants (1).

2. Ensemble selon la revendication 1, **caractérisé en ce que**, le dispositif d'éclairage (2) est constitué par une réglette comportant une source de lumière.

3. Ensemble selon la revendication 2, **caractérisé en ce que** la source de lumière est constituée par un guide de lumière placé à l'intérieur de la réglette (2).

4. Ensemble selon la revendication 2, **caractérisé en ce que** la source de lumière est constituée par un ensemble de diodes réparties à l'intérieur et sur la longueur de la réglette (2).

5. Ensemble selon la revendication 2, **caractérisé en ce que** la réglette (2) comporte à son extrémité une languette (14) permettant de la manoeuvrer entre sa position rentrée et sa position extraite.

6. Ensemble selon l'une quelconque des revendications précédentes, **caractérisé en ce que** la réglette (2) est disposée dans un fourreau (11) ménagé à l'extérieur de la cloison latérale de la boîte à gants (1).

7. Ensemble selon la revendication 6, **caractérisé en ce que** le fourreau (11) recevant la réglette (2) est parallèle à la tablette extractible (3).

8. Ensemble selon l'une quelconque des revendications précédentes, **caractérisé en ce que** la réglette (2) émet de la lumière à l'intérieur de la boîte à gants (1) à travers des ouvertures (15) ménagées dans la cloison latérale (6).

9. Ensemble selon l'une quelconque des revendications précédentes, **caractérisé en ce que** la réglette (2) émet de la lumière à travers des ouvertures (16) ménagées sur sa périphérie.

10. Ensemble selon l'une quelconque des revendications 8 ou 9, **caractérisé en ce que** la réglette (2) en position rentrée a ses ouvertures (16) en correspondance avec les ouvertures (15) ménagées dans sa cloison latérale (6) de la boîte à gants (1).

11. Véhicule comportant un ensemble de boîte à gants multifonctions comprenant une tablette extractible pourvu d'un dispositif d'éclairage selon l'une quelconque des revendications 1 à 10.
